**Europäisches Patentamt**

**European Patent Office**

**Office européen des brevets**

(19)

(11) Publication number: **0 027 725**
**A1**

(12)

# EUROPEAN PATENT APPLICATION

(21) Application number: **80303664.9**

(22) Date of filing: **16.10.80**

(51) Int. Cl.³: **B 65 G 47/16**
**B 65 G 43/08**

(30) Priority: **17.10.79 ZA 795543**

(43) Date of publication of application:
**29.04.81 Bulletin 81/17**

(84) Designated Contracting States:
**DE FR GB NL SE**

(71) Applicant: **Anglo American Corporation of South Africa Limited**
**44 Main Street**
**Johannesburg Transvaal(ZA)**

(72) Inventor: **Fargher, Ian Jefferson**
**5 Utrecht Street**
**Die Heuwel, Witbank Transvaal(ZA)**

(72) Inventor: **Renda, Stanislav Leopold**
**No: 2 Judy Street**
**Witbank, Transvaal(ZA)**

(74) Representative: **Jennings, Guy Kenneth et al,**
**GILL JENNINGS & EVERY 53/64 Chancery Lane**
**London WC2A 1HN(GB)**

(54) **Method and apparatus for conveyor belt feeding.**

(57) In order to minimize the risk of damage to the belt of a long-distance conveyor by the deposition of unsuitable material, such as tramp iron, on the belt, a belt feeder (12) is interposed between the discharge of the feed chute (10) and the long-distance conveyor (11). The belt feeder is driven off the long-distance conveyor by means of an endless belt (20). The speed of the belt feeder is continuously monitored to detect unprogrammed speed reductions, and both the belt feeder and the long-distance conveyor are stopped on such detection, so that any damage caused will most likely be confined to the belt feeder only.

EP 0 027 725 A1

./...

FIG _ 1

GJE/180/133

Anglo American Corporation of South Africa Limited

- 1 -

Method and apparatus for
Conveyor belt feeding

## BACKGROUND OF THE INVENTION

THIS invention relates to the feeding of conveyor belts and more particularly to the feeding of conveyor belts of very long extent.

Conventionally long distance conveyor belts are fed at supply bins through chutes which feed directly onto the tail end of the belt. Various safety devices have been tried to prevent damage to the belt by tramp iron and the like. It has however happened that these devices did not timeously reveal an object that was doing damage to a long belt. In any case it would be of advantage to prevent some objects from reaching the belt. Such objects are, for example, dislodged liner plates of feed chutes.

## SUMMARY OF THE INVENTION

According to the invention, a belt feeder is interposed between the discharge of a feed chute and a long-distance conveyor to communicate material from the feed chute to the long-distance conveyor.

Further according to the invention, the belt feeder is driven through a friction drive by means of the top run of the long-distance conveyor. This may be achieved by having an endless belt sandwiched between a part of the top run of the long-distance conveyor and at least one idler roller thereof, and driving a driven roller of the belt feeder off a roller over which the endless belt passes.

The belt feeder may be arranged at any angle to the long-distance conveyor. If the belt feeder is arranged so that it is not parallel to the long-distance conveyor, it may be driven via a gearbox intermediate the roller over which the endless belt passes and the driven roller of the belt feeder.

Also according to the invention, the belt feeder speed is continuously monitored to detect unprogrammed speed reductions and on such detection both the long-distance conveyor and the belt feeder are stopped.


DESCRIPTION OF THE DRAWINGS

Figure 1 is a front view of a feeder system according to the invention. and,
Figure 2 is a section on the line 2 - 2 in Figure 1.
Figure 3 is a front view of an alternative feeder system in which the belt feeder is at right angles to the long-distance conveyor.

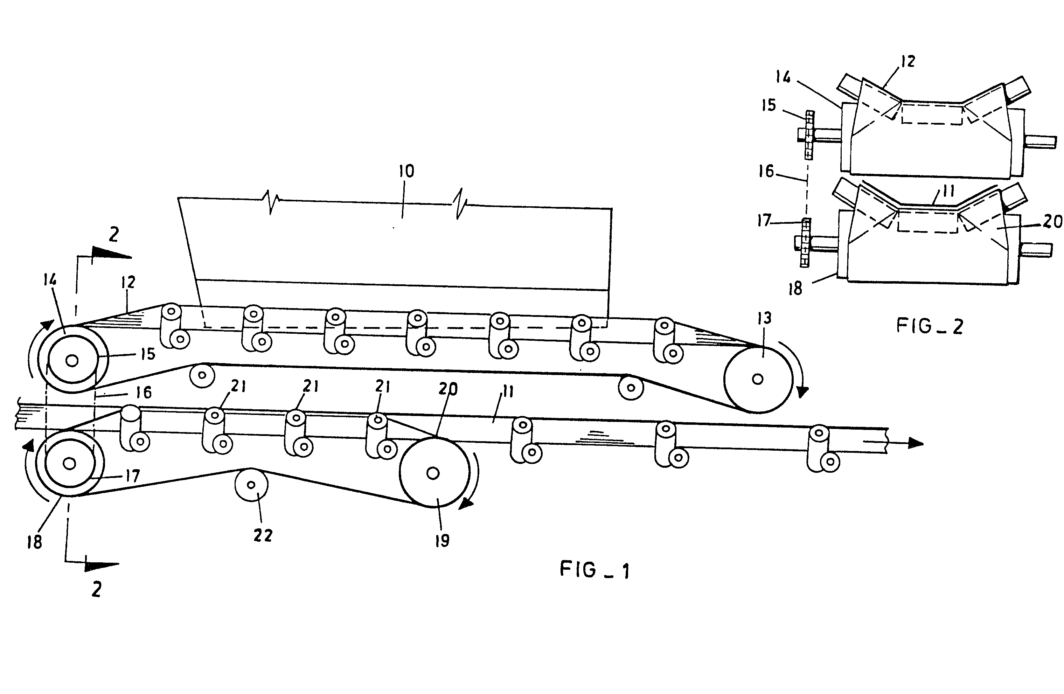

In Figures 1 and 2 a feed chute 10 is shown above a long distance conveyor the upper run of the belt of which has been marked 11. Interposed between these two elements is a feed conveyor having an endless belt 12, an idling head roller 13 and a driven tail roller 14.

The roller 14 is driven by a gear 15 which is connected by means of a chain 16 to a gear 17. The gear is fast with a drum 18 which is spaced from another drum 19. An endless belt 20 passes around the drums 18 and 19 and also over a series of idler roller assemblies 21 supporting the run 11. A snub pulley 22 tensions the belt 20.

Thus as the belt 11 runs to the right, it causes the drum 18 to rotate and that in turn turns the drum 14 for the belt 12 to run to the right.

Should an object such as a chute liner enter the feed, it will land on and damage the belt 12, but it is unlikely that such an object will land on the belt 11 to cause damage to it. It is a simple matter to replace the belt 12 while the belt 11 is very expensive and difficult to replace.

The speed of the roller 13 is constantly monitored, e.g. by means of spokes on the roller which pass an inductive proximity switch to yield signals which are amplified and processed. When the speed of the belt 12 reaches a predetermined low, a stop signal is given and the main drive motor of the belt 11 is switched off. Due to the high inertia of the belt 12, a device such as a clutch is provided in the drive of the roller 15 so that the belt 12 can be brought to an almost instantaneous stop while the belt 11 is still moving due to its inertia. In addition the feed to the belt 12 is also stopped as by the stop signal.

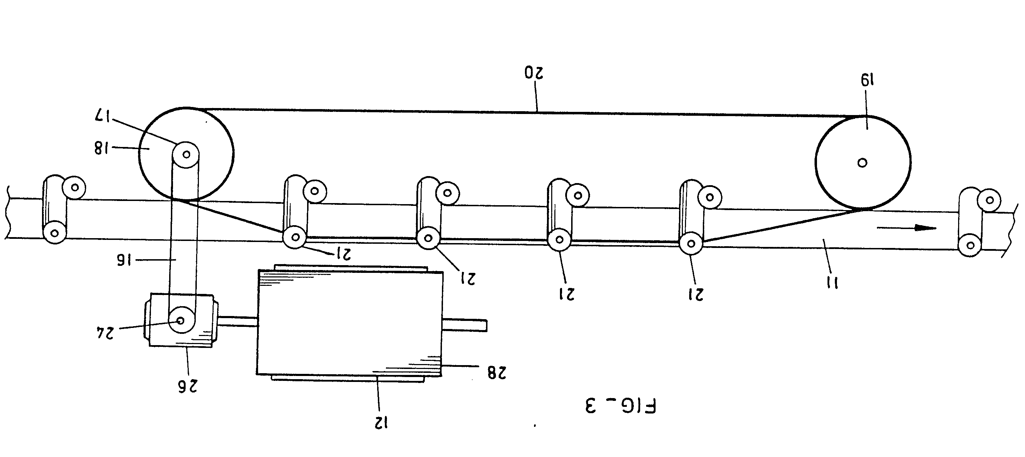

Figure 3 shows an alternative arrangement of the belt feeder in relation to the long-distance conveyor. Here, the belt feeder is arranged at right angles to the direction of travel of the long-distance conveyor. Components of the system which are the same as in Figures 1 and 2 are indicated by the same reference numerals in Figure 3.
In this arrangement, a chain 16 passes around a gear 17 and a gear 24, which forms part of a gearbox 26. The gearbox 26 serves to translate the rotation of the gear 24 through a right angle, to drive the roller 28 of the belt feeder so that the belt feeder discharges at right angles to the long-distance conveyor.

The belt feeder may be arranged at any angle to the long-distance conveyor, by means of a suitable gearing system, and this is especially useful in cases where the feed chute is not positioned directely over the conveyor belt.

CLAIMS:-

...

1.
A method of feeding a long-distance conveyor from a feed chute including the steps of interposing a belt feeder between the discharge of the chute and the long-distance conveyor and driving the belt feeder by means of the long-distance conveyor to dispense material from the chute to the long-distance conveyor.

2.
A method according to claim 1, in which the belt feeder is driven through a friction drive by means of the top run of the long-distance conveyor.

3.
A method according to either of the preceding claims, in which the speed of the belt feeder is continuously monitored to detect unprogrammed speed reductions, and both the long-distance conveyor and the belt feeder are stopped on detection of a speed lower than a predetermined low.

4.
A material feeding station for a long-distance conveyor, comprising a feed chute for dispensing material, a long-distance conveyor for transporting the material, a belt feeder interposed between the discharge of the feed chute and the long distance conveyor and motion transmitting means linking the long-distance conveyor and the belt feeder to drive the belt feeder off the long-distance conveyor.

5.
A material feeding station according to claim 4, in which the motion transmitting means comprises an endless belt sandwiched between the top run of the long-distance conveyor and at least one of its idler rollers, a pulley over which the endless belt passes driving a roller of the belt feeder.

6.
A material feeding station according to claim 4 or 5, having means to continuously monitor the speed of the belt feeder, to detect unprogrammed speed reductions, and to stop both the belt feeder and the long-distance conveyor if the speed is below a predetermined low.

7.
A method for feeding a long-distance conveyor, substantially as herein described, with reference to Figures 1 and 2, or 3 of the accompanying drawings.

8.
A material feeding station substantially as herein described, with reference to Figures 1 and 2, or 3 of the accompanying drawings.

FIG_2

FIG_1

1/2

0027725

FIG_3

| Category | Citation of document with indication, where appropriate, of relevant passages | Relevant to claim |
|---|---|---|
| | **DOCUMENTS CONSIDERED TO BE RELEVANT** | |
| A | GB - A - 1 135 750 (PATENTVER-WALTUNGSGESELLSCHAFT MIT BE-SCHRÄNKTER HAFTUNG)<br><br>+ Fig. 1,2 +<br><br>-- | 1,4 |
| A | US - A - 2 735 537 (LINK-BELT COMPANY)<br><br>+ Fig. 1-6 +<br><br>-- | 1,2,5 |
| A | US - A - 2 372 131 (THE OHIO BRASS COMPANY)<br><br>+ Drawing +<br><br>-- | 3,6 |
| A | GB - A - 1 435 336 (FRIED. KRUPP GESELLSCHAFT MIT BESCHRÄNKTER HAFTUNG)<br><br>+ Fig. 1,2 +<br><br>---- | 1,2,5 |

**CLASSIFICATION OF THE APPLICATION (Int. Cl. ³)**

B 65 G 47/16
B 65 G 43/08

**TECHNICAL FIELDS SEARCHED (Int Cl. ³)**

B 65 G 23/00
B 65 G 43/00
B 65 G 47/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 14-01-1981 | BEDNAR |

EPO Form 1503.1  06.78